# EUROPÄISCHE PATENTANMELDUNG

(11) **EP 4 742 151 A1**
(43) Veröffentlichungstag der Anmeldung: **13.05.2026**
(21) Anmeldenummer: 25207051.1
(22) Anmeldetag: 06.10.2025
(51) Int. Cl.: G06T 7/00, B29C 48/92, G01N 21/89, B29D 30/00

(54) **VERFAHREN ZUR DETEKTION DER FEHLER EINES GUMMISTREIFENS FÜR FAHRZEUGREIFEN**

(30) Priorität: 08.11.2024 FR 2412280
(71) Anmelder: Continental Reifen Deutschland GmbH, 30175 Hannover (DE)
(72) Erfinder: Sliwa, Fabien, 57200 Sarreguemines (FR); KESSLER, Mélodie, 57200 Sarreguemines (FR)
(74) Vertreter: Continental Corporation

(57) **Zusammenfassung**

Verfahren zur Detektion von Fehlern eines Gummistreifens für die Herstellung eines Reifens, das durch einen Computer umgesetzt wird und die folgenden Schritte umfasst:
- ein Erhalten (110) wenigstens eines Datenelements, das für eine Oberflächenbeschaffenheit wenigstens eines Teilbereichs des Streifens repräsentativ ist,
- ein Detektieren (120) wenigstens eines Fehlers auf dem Teilbereich des Streifens durch die Analyse des Datenelements, und
für jeden detektierten Fehler,
- ein Bestimmen (130) einer Position des Fehlers auf dem Streifen,
- ein Bestimmen (140) eines Kritikalitätsgrads des Fehlers wenigstens je nach der Position des Fehlers auf dem Streifen.

## Beschreibung

### Technisches Gebiet

Die vorliegende Offenbarung betrifft das Gebiet der Reifen für Fahrzeuge wie etwa Automobile oder Lastwagen oder beliebige andere mit Rädern versehene Fahrzeuge. Insbesondere betrifft sie das Gebiet der Gummistreifen für solche Reifen. Ganz besonders betrifft sie das Gebiet der Kontrolle der Qualität solcher Gummistreifen.

### Stand der Technik

Die Extrusion eines Gummistreifens für einen Reifen ist ein entscheidender Prozess bei der Herstellung der Reifen. Er beginnt mit dem Vermischen von Rohkautschuk mit verschiedenen Additiven wie etwa Vulkanisationsmittel, Verstärkungen und Füllstoffen. Dieses Gemisch wird dann erhitzt und in einer Extrusionsmaschine gepresst.

In dieser Maschine wird das Gemisch durch eine Düse gedrückt, die eine streifenförmige Öffnung ist, die dem gewünschten Querschnitt des Gummistreifens entspricht. Unter hohem Druck wird das Material durch diese Öffnung gezwängt, wodurch es seine endgültige Form und genauen Abmessungen bekommt.

Während dieses Prozesses werden Temperatur und Druck genau gesteuert, um die Qualität und die Eigenschaften des extrudierten Materials zu garantieren. Nach der Extrusion wird der Gummistreifen abgekühlt und kann weitere Herstellungsprozesse durchlaufen, wie etwa Laminieren und Kalandrieren, um die genauen Spezifikationen zu erreichen, die für eine Verwendung in einem Reifen erforderlich sind.

Jedoch lassen sich am Ausgang der Extrusionsmaschine Fehler auf dem Gummistreifen erkennen. Insbesondere können "Knoten" oder "Klumpen" auf dem Streifen vorhanden sein. Diese sind Materialanhäufungen verschiedener Form und Größe, die verhindern, dass der Gummistreifen vollkommen gleichmäßig ist.

Sobald der Reifen mit einem Abschnitt des Gummistreifens gebildet ist, kann ein auf diesem Abschnitt vorhandener Klumpen leider dazu führen, dass der Reifen schnell Schaden nimmt: ein Klumpen kann der Grund eines vorzeitigen Reißens des Streifens und des Reifens sein. Ein solcher Fehler kann die Sicherheit eines Fahrzeugs, das mit einem solchen Reifen versehen ist, und von dessen Insassen gefährden.

Da Klumpen ganz unterschiedliche Formen und Größen aufweisen, können nur einige von ihnen je nach ihrer Form, Größe und Stelle auf der Oberfläche des Streifens einen Riss erzeugen, und es ist daher sehr schwierig und zeitraubend, einen Klumpen zu charakterisieren, und einen gefährlichen Klumpen zu detektieren umso mehr, bevor der Reifen aus dem Streifen gebildet wird. Insbesondere können paradoxerweise bestimmte große Klumpen harmlos und kleinere Klumpen gefährlich sein.

Zudem kann ein Extruder eine Reihe von Düsen umfassen, durch die das Material gedrückt wird, wobei jede Düse eine bestimmte Form aufweist, um ein Endprodukt mit einer genauen Geometrie zu erzeugen. So können die Düsen je nach den Produktionsbedarfen gewechselt werden, was eine Vielseitigkeit bei der Herstellung verschiedener Produkte aus demselben Grundmaterial ermöglicht. Das Endprodukt kann jedoch auch aus mehreren Grundmaterialien gebildet sein: Anstelle eines einzelnen Materials, das alle Düsen durchläuft, wird jedes Material zu seiner eigenen jeweiligen Düse geleitet. Jede Düse ist dann dafür ausgelegt, ein bestimmtes Material nach den Anforderungen des Endprodukts zu formen.

Dieser Prozess ermöglicht die Herstellung von Verbund- oder Mehrschichtprodukten, wobei verschiedene Teilbereiche des Endprodukts von unterschiedlichen Materialien gebildet sind. Dies kann Vorteile wie etwa bestimmte Eigenschaften für jede Komponente oder eine Kombination von Eigenschaften verschiedener Materialien in einem einzigen Produkt bieten. Diese Vielfalt an Materialien bei der Herstellung des Endprodukts bringt jedoch auch eine Vielfalt bei den Fehlern und deren Folgen sowie Komplexität bei der Erkennung der tatsächlich risikobehafteten Fehler mit sich.

### Kurzdarstellung

Die vorliegende Offenbarung verbessert die Situation.

Es wird ein Verfahren zur Detektion von Fehlern eines Gummistreifens für die Herstellung eines Reifens vorgeschlagen, das durch einen Computer umgesetzt wird und die folgenden Schritte umfasst:
- ein Erhalten wenigstens eines Datenelements, das für eine Oberflächenbeschaffenheit wenigstens eines Teilbereichs des Streifens repräsentativ ist,
- ein Detektieren wenigstens eines Fehlers auf dem Teilbereich des Streifens durch die Analyse des Datenelements, und
   für jeden detektierten Fehler,
- ein Bestimmen einer Position des Fehlers auf dem Streifen,
- ein Bestimmen eines Kritikalitätsgrads des Fehlers wenigstens je nach der Position des Fehlers auf dem Streifen.

Vorteilhafterweise kann das Datenelement, das für eine Oberflächenbeschaffenheit eines Teilbereichs des Streifens repräsentativ ist, ein Bild der Oberfläche des Streifens oder ein dreidimensionales Profil der Oberfläche des Streifens sein.

In einer Ausführungsform der Erfindung kann das Verfahren über eine Reihe von Daten, die für die Oberflächenbeschaffenheit eines durchgehend ablaufenden Streifens repräsentativ sind, wiederholt werden, so dass die Daten den gesamten Streifen abdecken.

Vorteilhafterweise kann das Verfahren ferner ein Versehen jedes Auftretens eines Fehlers auf dem Streifen mit einem Zeitstempel, eine statistische Analyse des Auftretens von Fehlern auf dem Streifen umfassen, und das Detektieren eines Fehlers und das Bestimmen von dessen Kritikalitätsgrad können ferner anhand der statistischen Analyse durchgeführt werden.

Das Detektieren kann von einem Maschinenlernalgorithmus durchgeführt werden, der dafür trainiert ist, die Fehler eines Gummistreifens anhand einer Datenbank von Bildern mit und ohne Fehler zu detektieren, die jeweils mit oder ohne Fehler gekennzeichnet sind, die wenigstens teilweise Bilder von Gummistreifen mit Fehlern beinhaltet.

Das Detektieren des Fehlers und das Bestimmen des Kritikalitätsgrads können von einem Maschinenlernalgorithmus durchgeführt werden, der dafür trainiert ist, die kritischen Fehler eines Gummistreifens anhand einer Datenbank von Bildern mit und ohne kritischen Fehler zu detektieren, die jeweils mit einem Kritikalitätsgrad gekennzeichnet sind

Das Detektieren des Fehlers und das Bestimmen des Kritikalitätsgrads werden von einem Maschinenlernalgorithmus zur Detektion von Anomalien durchgeführt, der dafür trainiert ist, die kritischen Fehler eines Gummistreifens anhand einer Datenbank von Bildern mit nicht kritischen Fehlern und ohne Fehler zu detektieren.

Vorteilhafterweise kann das Bestimmen der Position des Fehlers das Bestimmen wenigstens einer von einer seitlichen und Längsposition des Fehlers auf dem Streifen umfassen.

In einer Ausführungsform kann das Verfahren ferner das Bestimmen einer Längsposition des Fehlers, und, wenn der für diesen Fehler bestimmte Kritikalitätsgrad eine vorbestimmte Schwelle überschreitet, zusätzliche Schritte des Speicherns der Längsposition des Fehlers und des Abtrennens eines Abschnitts des Streifens, der den Fehler aufweist, vom Rest des Gummistreifens anhand der Längsposition umfassen.

Vorteilhafterweise kann der Kritikalitätsgrad eines Fehlers wenigstens anhand von dessen seitlicher Position auf dem Streifen und dessen Form festgelegt werden.

Bei einer Variante kann das Detektieren ein Klassifizieren verschiedener Fehlertypen auf dem Gummistreifen, wie etwa Klumpen, ausgerissene Ränder oder Risse umfassen, wobei der Maschinenlernalgorithmus zur Klassifizierung dafür trainiert ist, die verschiedenen Fehlertypen anhand einer Datenbank von Bildern von Gummistreifen mit verschiedenen Fehlertypen und Kennzeichnungen entsprechend dem Fehlertyp zu klassifizieren.

Gemäß einem weiteren Aspekt der Erfindung wird ein Computerprogramm vorgeschlagen, das Anweisungen für die Umsetzung des Verfahrens bei Ausführung dieses Programms durch einen Prozessor beinhaltet.

Gemäß einem weiteren Aspekt der Erfindung wird ein computerlesbares nichtflüchtiges Speichermedium vorgeschlagen, auf dem ein Programm für die Umsetzung des Verfahrens bei Ausführung dieses Programms durch einen Prozessor gespeichert ist.

Gemäß einem weiteren Aspekt der Erfindung wird eine Recheneinheit vorgeschlagen, die Folgendes umfasst:
- eine Eingabeschnittstelle zum Empfang wenigstens eines Bilds eines Gummistreifens,
- einen Speicher, der wenigstens die Anweisungen des Computerprogramms beinhaltet,
- einen Prozessor mit Zugriff auf den Speicher zum Lesen der Anweisungen und Ausführen des Verfahrens,
- eine Ausgabeschnittstelle zum Bereitstellen eines Kritikalitätsgrads eines Fehlers, der auf dem Bild vorhanden ist

Gemäß einem letzten Aspekt der Erfindung wird ein Extruder vorgeschlagen, der geeignet ist, einen Gummistreifen durchgehend zu extrudieren, zum Beispiel auf einem Förderer, und eine Bilderfassungsvorrichtung und/oder ein 3D-Profilometer beinhaltet, die geeignet sind, wenigstens ein Datenelement zu erfassen, das für eine Oberflächenbeschaffenheit wenigstens eines Teilbereichs des extrudierten Gummistreifens repräsentativ ist, und der mit einer Recheneinheit gemäß der vorstehenden Beschreibung verbunden ist.

### Kurzbeschreibung der Zeichnungen

Weitere Eigenschaften, Einzelheiten und Vorteile der Erfindung werden beim Lesen der nachstehenden ausführlichen Beschreibung und bei der Auswertung der beigefügten Zeichnungen deutlich, in denen:
**Fig. 1**

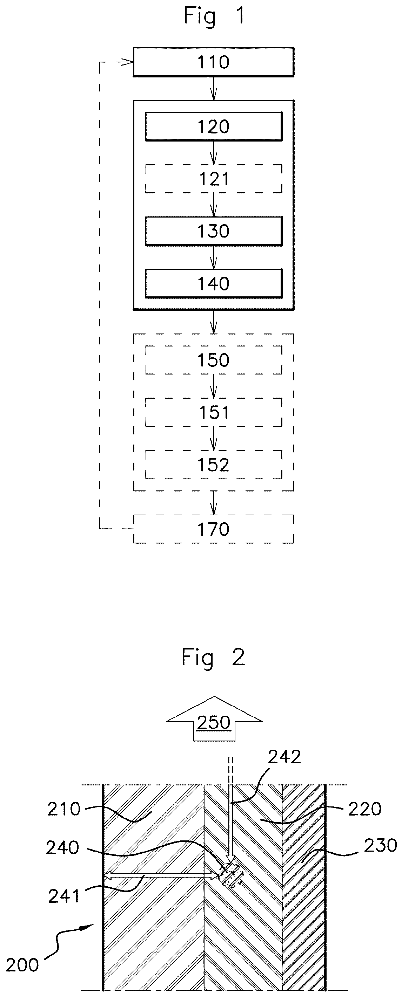

   [Fig. 1] ein Ablaufdiagramm der Schritte des Verfahrens gemäß einer Ausführungsform der Erfindung schematisch zeigt.
**Fig. 2**
   [Fig. 2] einen Teilbereich eines Gummistreifens mit einem Fehler schematisch zeigt.
**Fig. 3**

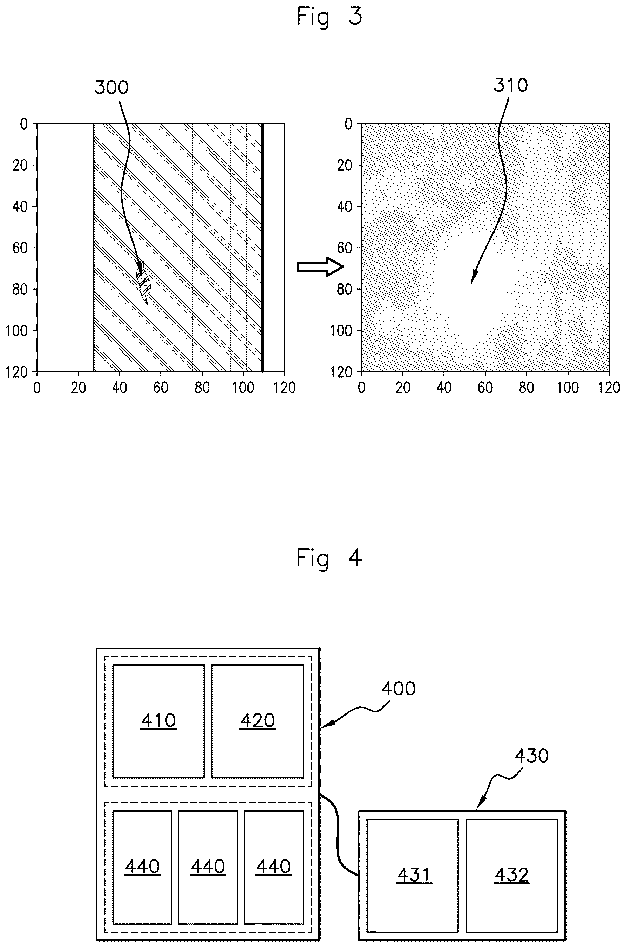

   [Fig. 3] ein Ergebnis des Detektierens eines Fehlers anhand eines Bilds gemäß einer Ausführungsform des Verfahrens zeigt.
**Fig. 4**
   [Fig. 4] einen Extruder und seine Hauptkomponenten gemäß einer Ausführungsform der Erfindung schematisch zeigt.

### Beschreibung der Ausführungsformen

Es wird zunächst auf Figur 4 Bezug genommen, die einen Extruder gemäß einer Ausführungsform der Erfindung mit seinen Hauptkomponenten darstellt.

Ein Extruder 400 (oder eine Extrusionsmaschine) der Erfindung umfasst zuallererst eine Anordnung von Düsen 440, durch die der Gummistreifen extrudiert wird. Eine Düse 440 umfasst eine Öffnung, deren Form den Querschnitt des Streifens definiert. Ein Material, das zuvor erhitzt und in einem Trichter des Extruders gemischt wird, wird so durch eine Düse 440 gedrückt. Eine solche Anordnung von Düsen 440 ermöglicht insbesondere, mehrere Materialien gleichzeitig zu verarbeiten: Jedes Material wird zu seiner eigenen jeweiligen Düse geleitet, um den Streifen zu bilden.

Die meisten Oberflächenfehler eines durch einen solchen Extruder 400 extrudierten Gummistreifens sind direkt bei der Bildung des Streifens sichtbar: nachdem die Materialien ihre Düse 440 durchlaufen haben. Andere Fehler, zum Beispiel in Verbindung mit dem Abkühlen des Gummistreifens, werden bald nach der Bildung des Streifens sichtbar.

Der Extruder 400 umfasst daher vorteilhafterweise Mittel zur Erfassung von Informationen über die Beschaffenheit der Oberfläche des Gummistreifens. Diese Mittel werden daher am Ausgang des Extruders 400 platziert, um ein Maximum an Informationen über das Endprodukt zu sammeln. Alternativ können diese Mittel versetzt und mit dem Extruder 400 verbunden sein.

Diese Mittel können insbesondere Bilderfassungsvorrichtungen wie ein Fotoapparat oder eine Kamera sein. Optional können diese Vorrichtungen in mehreren Exemplaren vorliegen, und insbesondere in zwei Exemplaren, um die Erfassung von stereoskopischen Bildinformationen zu ermöglichen, die somit Informationen über die 3D-Geometrie des Gummistreifens umfassen. Alternativ können die Vorrichtungen eine Stereoskopiefunktionalität direkt enthalten.

Alternativ können diese Mittel auch direkt Vorrichtungen zur Erfassung einer 3D-Geometrie sein, wie etwa 3D-Profilometer.

Ein 3D-Profilometer ist ein Instrument, das zur Erfassung dreidimensionaler Informationen über die Form und die Struktur von Oberflächen oder Objekten verwendet wird. Es verwendet in der Regel eine Kombination aus Sensoren und Technologien wie etwa strukturiertem Licht, Stereovision, Photogrammetrie oder Laserscanning, um Daten über die Topografie einer Oberfläche mit hoher Genauigkeit zu erfassen. Ein solches Profilometer ist daher geeignet, genaue Informationen über die Beschaffenheit einer Oberfläche zu erhalten, zum Beispiel die Oberfläche eines Gummistreifens mit besonders kleinen Fehlern.

Diese Mittel können vorteilhafterweise auch so angeordnet sein, dass sie sowohl die Oberseite als auch die Unterseite des Streifens abdecken.

In der Ausführungsform von Figur 4 umfasst der Extruder 400 daher eine Kamera 410 und ein 3D-Profilometer 420.

Zur Umsetzung des Verfahrens der Erfindung kann der Extruder 400 mit einer Recheneinheit 430 verbunden sein. Diese Verbindung kann drahtgebunden (wie darstellt) oder drahtlos mittels bekannter oder Ad-hoc-Drahtloskommunikationsprotokolle sein. Zum Beispiel kann die Recheneinheit 430 ein Remote-Server sein.

Alternativ kann die Recheneinheit 430 teilweise oder vollständig in den Extruder 400 integriert sein, was den Einsatz eines Extruders der Erfindung erleichtert und die Kompaktheit der Lösung verbessert.

Eine Recheneinheit 430 kann insbesondere einen Speicher 431 umfassen, der mit einem Rechner 432 verbunden ist, so dass der Speicher 431 Code-Anweisungen speichern kann, die vom Rechner 432 ausgeführt werden, um das Verfahren der Erfindung umsetzen zu können. Der Speicher 431 kann ebenfalls ein oder mehrere vorab trainierte Maschinenlernmodelle speichern, die nachstehend näher beschrieben werden, insbesondere um einen Fehler auf dem Gummistreifen detektieren zu können. Der Speicher 431 kann ein nichtflüchtiger elektronischer Speicher, eine optische Festplatte usw. sein.

Der Rechner 432 kann zum Beispiel ein Rechner vom Typ Prozessor, Mikroprozessor, Mikrocontroller, programmierbare logische Schaltung (FPGA usw.) und/oder ein spezieller integrierter Schaltkreis (ASIC usw.) sein.

Eine solche Recheneinheit 430 ermöglicht es somit, das Verfahren der Erfindung umzusetzen.

Es wird nunmehr auf Figur 1 Bezug genommen, die ein Ablaufdiagramm der Schritte des Verfahrens gemäß einer Ausführungsform schematisch darstellt.

Das Verfahren der Erfindung betrifft somit extrudierte Gummistreifen, die einen Reifen bilden.

Die Hauptfunktion eines Reifens ist, eine Haftkontaktfläche zur Straße bereitzustellen, wodurch die Übertragung der Kraft des Motors, die Bremsung und die Lenkung des Fahrzeugs ermöglicht wird. Die Reifen sind in der Regel mit Luft aufgeblasen, um ein bequemes und sicheres Fahren sicherzustellen. Sie werden in verschiedenen Größen, Profilen und Zusammensetzungen gefertigt, um den speziellen Anforderungen verschiedener Fahrzeugtypen und Fahrbedingungen gerecht zu werden.

Ein Gummistreifen eines Reifens ist daher dazu bestimmt, verschiedenen Kräften insbesondere in Verbindung mit dessen Kontakt mit dem Boden, der Bewegung des Fahrzeugs oder auch dem Reifeninnendruck ausgesetzt zu sein. Ein Gummistreifen, dessen Oberflächenbeschaffenheit Fehler umfasst, kann je nach den Fehlern und sobald er von diesen Kräften verformt wird, vorzeitig Schaden nehmen.

In diesem Dokument ist mit "Fehler" jede unerwünschte und unerwartete Abweichung am Endprodukt gemeint. Zu den häufigsten Fehlern bei einem Gummistreifen gehören zum Beispiel "Klumpen" oder "Knoten", bei denen es sich um Materialanhäufungen handelt, die die Oberfläche des Gummistreifens verformen. Die Klumpen sind unterschiedlich groß: Einige sind nur einen Millimeter groß, andere mehrere Zentimeter.

Es lassen sich beispielsweise auch Luftblasen, Risse oder ausgerissene Ränder feststellen.

Ein Fehler wird insbesondere dann als kritisch erachtet, wenn er einen vorzeitige Schaden des Gummistreifens und/oder des künftigen Reifens, den der Streifen bilden wird, verursachen kann.

Wie in Figur 1 dargestellt, beginnt das Verfahren mit dem Erhalten 110 von Informationen über den Gummistreifen und insbesondere Daten, die für die Oberflächenbeschaffenheit des Streifens repräsentativ sind. Dieses Datenelement, das für eine Oberflächenbeschaffenheit eines Teilbereichs des Streifens repräsentativ ist, kann ein Bild der Oberfläche des Streifens oder ein dreidimensionales Profil der Oberfläche des Streifens sein.

Dieses Datenelement, das für eine Oberflächenbeschaffenheit eines Teilbereichs des Streifens repräsentativ ist, kann insbesondere nach einer Erfassung durch die Bilderfassungsvorrichtung 410 oder ein 3D-Profilometer 420 erhalten werden.

Das repräsentative Datenelement kann vorab verarbeitet werden, insbesondere um die folgenden Schritte des Verfahrens und insbesondere das Detektieren von Fehlern zu erleichtern. Zum Beispiel können Bilddaten Helligkeits-, Kontrast-, Farbton- und Sättigungsanpassungen erfahren, um eventuelle Fehler auf dem Bild hervorzuheben.

Zudem können die Daten insbesondere normalisiert werden. Zum Beispiel können Bilddaten verzerrt oder auf eine bestimmte Größe zugeschnitten, abgeflacht (das heißt in ihrer Abmessung reduziert) oder auch gedreht werden, insbesondere um die Gummistreifen von einem Bild zum anderen auszurichten.

Vorteilhafterweise kann das Verfahren in dem Maße wiederholt werden, wie der Gummistreifen extrudiert wird, jedes neue Erhalten 110 kann dann auf einem neuen Teilbereich des Streifens durchgeführt werden. Dieses Wiederholen des Verfahrens ermöglicht daher, die Daten in Reihe zu erhalten 110. So wird unter "Datenreihe" eine geordnete Sammlung von Werten oder Beobachtungen verstanden, die im Allgemeinen im Zeitverlauf oder in einer anderen bedeutsamen Reihenfolge gespeichert werden.

Vorteilhafterweise können die Daten in Reihe erhalten 110 werden, um den gesamten Streifen abzudecken. Mit anderen Worten, die Erfassungsfrequenz wird je nach der Laufgeschwindigkeit des Gummistreifens bestimmt, so dass aufeinanderfolgend erfasste Daten aufeinanderfolgende Abschnitte eventuell mit teilweiser Überlappung des Streifens abdecken.

Wenn die Daten teilweise miteinander überlappen, kann so sichergestellt werden, dass der gesamte Streifen gut erfasst wird, das heißt, ohne dass sich ein Abschnitt des Streifens zwischen zwei Bildern befindet und somit nicht erfasst wird.

So kann der Schritt des Erhaltens 110 des Verfahrens ermöglichen, alle detektierbaren Fehler festzustellen, die auf der Oberfläche des Gummistreifens vorhanden sind, ohne welche auszulassen. Die repräsentativen Daten, die erhalten 110 werden, umfassen dann die Informationen über die Fehler des Gummistreifens.

Sobald diese Daten erhalten 110 sind, umfasst das Verfahren das Detektieren 120 der Fehler anhand der Daten. In diesem Schritt geht es darum, in den erhaltenen 110 Daten das Vorhandensein eines Fehlers, und insbesondere eines kritischen Fehlers zu erkennen.

In einer Ausführungsform der Erfindung können die Fehler durch Verwendung eines Maschinenlernalgorithmus detektiert werden. Ein solcher Algorithmus umfasst zwei Phasen, eine Trainingsphase und eine Inferenzphase.

Im Verlauf der Trainingsphase kann das Modell anhand eines Satzes von gekennzeichneten Daten trainiert werden, um Muster, Beziehungen und Parameter zu erlernen, die es ihm ermöglichen, Vorhersagen zu treffen oder eine bestimmte Aufgabe auszuführen. Die Trainingsdaten bestehen aus Eingabebeispielen und entsprechenden bekannten Ausgabekennzeichnungen oder Zielwerten. Das Modell passt seine internen Parameter auf der Grundlage der Lerndaten iterativ an, um die Abweichung zwischen den vorhergesagten Ausgaben und den tatsächlichen Kennzeichen zu minimieren. Dieser Prozess wird oft als Training, Optimierung oder Lernen bezeichnet. Die Trainingsphase zielt darauf ab, den besten Modellparametersatz zu finden, der sich gut für neuartige Daten verallgemeinern lässt und es ermöglicht, genaue Vorhersagen zu treffen.

Mit anderen Worten, die Trainingsphase ist der Schritt, bei dem ein Maschinenlernmodell Modelle und Beziehungen anhand von gekennzeichneten Daten lernt, um genaue Vorhersagen zu treffen oder eine bestimmte Aufgabe auszuführen.

Sobald das Modell trainiert ist, kann es während der Inferenzphase verwendet werden, die auch Deploymentphase oder Vorhersagephase genannt wird. Im Verlauf dieser Phase wird das trainierte Modell dafür verwendet, Vorhersagen zu treffen oder die gewünschte Aufgabe an neuen, neuartigen Daten auszuführen. Die Inferenzphase besteht darin, das erlernte Modell auf die Eingangsdaten anzuwenden und Ausgabevorhersagen oder -schätzungen basierend auf den Modellen und den Beziehungen, die es während des Trainings erlernt hat, zu erhalten. Die Inferenz ist in der Regel die operative Phase, in der das Modell verwendet wird, um Echtzeitvorhersagen zu liefern oder Aufgaben in der Produktion oder in praktischen Anwendungen auszuführen.

Mit anderen Worten, die Inferenzphase ist der Schritt, bei dem das trainierte Modell verwendet wird, um Vorhersagen zu treffen oder Aufgaben an neuen, unbekannten Daten in Echtzeit oder im Rahmen praktischer Anwendungen auszuführen.

Das Maschinenlernmodell des Verfahrens kann in der Trainingsphase dafür trainiert werden, die Fehler anhand von Daten zu detektieren, die für die Oberflächenbeschaffenheit von Gummistreifen, wahlweise mehrerer verschiedener Gummistreifen, repräsentativ sind. Diese repräsentativen Daten können durch eine Expertenanalyse gekennzeichnet worden sein. Diese Analyse kann vorab von einer Expertengruppe durchgeführt worden sein, die dafür zuständig ist, an einer Probe von Gummistreifenabschnitten zu bestimmen, ob der Abschnitt einen Fehler enthält, und den Kritikalitätsgrad des Fehlers zu bestimmen. Insbesondere können die Experten einen Satz von Kriterien bestimmen, die den Kritikalitätsgrad eines Fehlers beeinflussen, oder einfach bestimmen, ob ein Fehler kritisch ist oder nicht.

Dieser Kritikalitätsgrad kann eine Kritikalitätskategorie sein, zum Beispiel eine von "nicht kritisch", "etwas kritisch", "kritisch" und "sehr kritisch". Alternativ kann dieser Kritikalitätsgrad eine Zahl sein, zum Beispiel eine Gleitkommazahl zwischen 0 und 1. Wenn der Abschnitt mehrere Fehler enthält, kann jedem vorhandenen Fehler ein Kritikalitätsgrad zugeordnet werden.

Das Verfahren kann die Durchführung der Deploymentphase des Modells umfassen, insbesondere an neuen Gummistreifenabschnitten, die dem Modell nicht bekannt sind. Das Modell kann dann Fehler detektieren 120 und gegebenenfalls einen Kritikalitätsgrad eines Fehlers schätzen oder bestimmen 140.

Es wird nunmehr auf Figur 2 Bezug genommen, die einen Teilbereich eines Gummistreifens mit einem Fehler schematisch zeigt. So stellt Figur 2 einen Gummistreifen 200 dar, der in einer Richtung 250 extrudiert wird und sich aus 3 Materialien 210, 220, 230 zusammensetzt. In dem mittleren Material 220 ist ein Klumpen 240 vorhanden.

Das Verfahren umfasst vorteilhafterweise das Bestimmen 130 der Position des Fehlers 240 auf dem Streifen, das es ermöglicht, den Fehler auf dem Streifen räumlich zu verorten. Insbesondere kann seine Position eine seitliche Komponente 241 und/oder eine Längskomponente 242 umfassen.

Die Längsposition ist der Abstand, der den Fehler vom Anfang des Streifens in dessen Länge trennt und ermöglicht daher, zu bestimmen, ob ein Abschnitt des Streifens den Fehler umfasst.

Die seitliche Position ist der Abstand, der den Fehler vom Seitenrand des Gummistreifens trennt. Sie ermöglicht insbesondere, die Düse zu bestimmen, durch die der Fehler gelaufen ist und folglich das oder die Materialien, die ihn bilden. Je nach Material kann ein Fehler mehr oder weniger kritisch sein: Zwei Fehler derselben Art und Form, die sich nur durch das oder die Materialien unterscheiden, die sie bilden, können einen völlig unterschiedlichen Kritikalitätsgrad aufweisen.

Bei einer Expertenanalyse kann zusätzlich zur Art und Form die seitliche Position des Fehlers und daher das Material, in dem er sich befindet, berücksichtigt werden, um den Kritikalitätsgrad eines Fehlers zu bestimmen. Auf ähnliche Weise können diese Kriterien in den Berechnungen des Maschinenlernalgorithmus wiederzufinden sein.

Auf diese Weise ist der Maschinenlernalgorithmus gleichzeitig imstande, zu erkennen, ob ein Fehler tatsächlich in einem Satz von Daten, die für die Oberflächenbeschaffenheit eines Teilbereichs der Oberfläche des Gummistreifens repräsentativ sind, vorhanden ist, und gegebenenfalls den Kritikalitätsgrad eines Fehlers zu bestimmen 140.

Wenn mehrere Fehler durch ein und dieselbe Detektion 120 detektiert werden, kann zudem jeder Fehler bei der Bestimmung 140 seines jeweiligen Kritikalitätsgrads unabhängig verarbeitet werden. Alternativ kann jeder Fehler unter Berücksichtigung der umgebenden Fehler verarbeitet werden: eine Anhäufung von nahe beieinander liegenden Fehlern kann deren jeweiligen Kritikalitätsgrad erhöhen.

Das Detektieren 120 eines Fehlers und das Bestimmen 140 von dessen Kritikalitätsgrad können von unterschiedlichen Maschinenlernmodellen durchgeführt werden. Zum Beispiel kann ein erstes Modell für ein sehr wirksames Detektieren 120 zuständig sein, und ein zweites Modell für das Zuweisen eines genauen Kritikalitätsgrads für den als Fehler detektierten Bereich.

Alternativ kann ein Maschinenlernalgorithmus dafür trainiert werden, nur die kritischen Fehler zu detektieren 120. Zum Beispiel kann ein Maschinenlernalgorithmus dafür trainiert werden, jedem Pixel eines Bilds einen Vertrauensindex hinsichtlich des Vorhandenseins eines kritischen Fehlers zuzuweisen: Ein Pixelbereich, wo das Vertrauen hoch ist, entspricht so gleichzeitig einem Detektieren 120 eines Fehlers in diesem Bereich und dem Bestimmen 140 eines erhöhten Kritikalitätsgrads für diesen Fehler.

Ein solcher Maschinenlernalgorithmus ist dafür ausgelegt, bestimmte Fehler festzustellen, die bekannt sind und durch eine Expertenanalyse speziell gekennzeichnet werden.

In einer Ausführungsform kann der Maschinenlernalgorithmus ein Algorithmus zur Detektion von Anomalien sein. Ein Algorithmus zur Detektion von Anomalien ist dafür ausgelegt, Anomalien zu detektieren, das heißt ungewöhnliche Verhaltensweisen in einem Datensatz. Das Detektieren von Anomalien zielt darauf ab, jede größere Abweichung im Verhältnis zur erwarteten oder normalen Verhaltensweise der Daten zu detektieren.

Ein Modell zur Detektion von Anomalien kann daher an Streifen ohne kritische Fehler und zum Beispiel mit nicht kritischen Fehlern trainiert werden, um die kritischen Fehler als Anomalien zu detektieren.

Mit anderen Worten, das Modell ist an die Daten "gewöhnt", die einem Gummistreifen mit nicht kritischen Fehlern entsprechen, und jede ungewöhnliche Abweichung wie das Vorhandensein eines kritischen Fehlers, wird als Anomalie detektiert 120.

Dieser Typ von Algorithmus weist darüber hinaus eine bessere Wirksamkeit und eine bessere Robustheit auf.

Es wird nunmehr auf Figur 3 Bezug genommen, wo das linke Bild ein von der Kamera 410 erfasstes Bild darstellt und wo das rechte Bild einer Heatmap entspricht, die mit dem Auftreten von Anomalien verbunden ist.

Eine solche Heatmap stellt somit den Vertrauensindex des Algorithmus bei dessen Detektion eines kritischen Fehlers für einen bestimmten Pixel des Bilds dar. Bei diesem Beispiel ist der Vertrauensindex der Detektion umso höher, je heller der Bereich ist. Tatsächlich wird ein Klumpen 300 des Bilds detektiert 120 und im Bereich 310 als kritisch festgelegt 140.

Schließlich kann das Detektieren 120 des Verfahrens auch ein Klassifizieren 121 eines Fehlers je nach seiner Art, das heißt seinem Typ, umfassen. Die Fehler können je nach ihrem Typ oder ihrer Art unterschiedliche Verarbeitungen erfordern, und es kann daher vorteilhaft sein, sie kategorisieren zu können. Es lassen sich verschiedene Fehlertypen finden, wie etwa Klumpen, ausgerissene Ränder, Risse oder auch Luftblasen.

Diese Klassifizierung nach Typ kann von einem anderen Maschinenlernalgorithmus durchgeführt werden. Zum Beispiel detektiert 120 ein erster Algorithmus einen Fehler, ein zweiter Algorithmus klassifiziert 121 dessen Typ, und ein letzter Algorithmus bestimmt 140 dessen Kritikalitätsgrad. Auf diese Weise kann das Bestimmen 140 des Kritikalitätsgrads die Art des klassifizierten 121 Fehlers berücksichtigen.

Alternativ kann ein und derselbe Algorithmus die Klassifizierung gleichzeitig mit dem Detektieren und/oder dem Bestimmen des Kritikalitätsgrads durchführen.

In einer Ausführungsform kann dieser Algorithmus zum Beispiel ein individuelles Maschinenlernmodell zur Detektion von Anomalien sein, das mit einer freien Bibliothek wie Keras erstellt wurde.

Alternativ kann das Modell ein bekanntes und wirksames Modell für die Detektion von Fehlern oder Anomalien wie etwa ein Modell der Cognex ViDi Suite sein. Ein solches Modell kann feinabgestimmt ("fine-tuned" auf Englisch) werden, damit es besonders für die Detektion von Fehlern oder Anomalien für Gummistreifen für Reifen geeignet ist.

Zur Durchführung einer solchen Feinabstimmung ("fine-tuning" auf Englisch) wird ein vorab trainiertes Modell zur Detektion 120 aller Arten von Anomalien verwendet. Die Parameter (und Metaparameter) des Modells können zunächst angepasst werden, damit sie der Anwendung besser entsprechen, zum Beispiel unter Berücksichtigung der Art der Eingangsdaten für die Anwendung, wie die Bilder der Kamera 410 und die 3D-Profile des 3D-Profilometers 420.

Dann erfährt das Modell eine neue Trainingsphase an den anwendungsspezifischen Daten, das heißt den Daten, die für die Oberflächenbeschaffenheit von Gummistreifen repräsentativ sind. Dann spezialisiert sich das Modell, zum Beispiel auf die Detektion von Anomalien, die kritischen Fehlern auf dem Gummistreifen entsprechen.

Schließlich ist das Modell für eine Deploymentphase bereit, in dem Beispiel an neuen Gummistreifen.

Das Verfahren der Erfindung umfasst anschließend zwei Schritte, die je nach dem Kritikalitätsgrad eines Fehlers durchgeführt werden können, und insbesondere wenn der Kritikalitätsgrad eine Schwelle überschreitet.

Diese Schwelle kann sich in einer Grenze, einer Zahl oder der Zugehörigkeit zu einer oder mehreren Kategorien ausdrücken, je nach Bestimmung des Kritikalitätsgrads. Wenn zum Beispiel der Kritikalitätsgrad eine Gleitkommazahl zwischen 0 und 1 ist (wobei 0 einem nicht kritischen Fehler entspricht und 1 sehr kritisch ist), kann die Schwelle ebenfalls eine Gleitkommazahl zwischen 0 und 1 sein. Wenn der Kritikalitätsgrad eines Fehlers nach Kategorie festgelegt ist, zum Beispiel eine von "nicht kritisch", "etwas kritisch", "kritisch" und "sehr kritisch", gilt für die Schwelle dasselbe. Vorteilhafterweise kann die Schwelle so bestimmt werden, dass sie alle kritischen Fehler enthält. Eine solche Schwelle kann im Verlauf der Expertenanalyse bewertet werden.

Der erste der zwei Schritte ist das Speichern 150 der Position, insbesondere in Längsrichtung, des kritischen Fehlers, um zu einem späteren Zeitpunkt an dem Streifen eingreifen zu können. Gummistreifen sind im Allgemeinen in Kassetten aufgerollt. Das Speichern der Position ermöglicht, die Kassette und den Ort in der Kassette zu kennen, wo sich der entsprechende kritische Fehler befinden würde.

Ein Speichern kann so unter Berücksichtigung des Kritikalitätsgrads des Fehlers durchgeführt werden: Zum Beispiel können nur die kritischen Fehler gespeichert werden. Zudem kann das Speichern insbesondere digital erfolgen, zum Beispiel im Speicher 431.

Der zweite der zwei Schritte ist ein Schritt des Abtrennens 170 des Abschnitts des Streifens, der den Fehler aufweist, vom Rest des Gummistreifens. Wenn ein Fehler kritisch ist, wodurch ein Abschnitt des Streifens fehlerhaft wird, wird dieser Abschnitt so vom Rest des nicht fehlerhaften Streifens abgetrennt.

Dieser Schritt kann ein Eingriff am Gummistreifen sein, bei dem der Abschnitt des Streifens mit dem Defekt vom Rest des Streifens abgetrennt wird. Mit dieser Abtrennung ist gemeint, dass Schnitte in Querrichtung des Streifens vorgenommen werden, um den fehlerhaften Teilbereich des Streifens zu entfernen. Gegebenenfalls kann ein einzelner Schnitt durchgeführt werden, wobei der abgetrennte Abschnitt dann der Teilbereich zwischen dem Anfang des Gummistreifens und dem einzelnen Schnitt ist.

Ein auf diese Weise abgetrennter 170 Abschnitt kann zum Beispiel verworfen oder für andere Produkte wiederverwendet werden, für die der Fehler nicht kritisch wäre.

Wahlweise kann diesem Schritt des Abtrennens 170 ein Schritt des Markierens des Fehlers vorangehen, bei dem der Fehler einer Behandlung unterzogen wird, um ihn visuell leichter zu erkennen. Tatsächlich können einige kritische Fehler sehr klein sein, bis zu 1 mm; sie zu markieren, kann den Schritt des Abtrennens erleichtern, zum Beispiel wenn er von einem Bediener vorgenommen wird.

Der vorhergehende Schritt des Speicherns 150 erleichtert so den Schritt des Abtrennens 170: das Wiederfinden des Abschnitts des Streifens, der den Fehler umfasst, anhand der gespeicherten Position, insbesondere in Längsrichtung, in der Kassette wird erleichtert.

In einer Ausführungsform der Erfindung kann das Verfahren ein Versehen jedes Auftretens eines Fehlers, insbesondere eines kritischen Fehlers, mit einem Zeitstempel 151 umfassen.

Ein Versehen mit einem Zeitstempel entspricht dem Speichern des Zeitpunkts, zu dem ein bestimmter Fehler in dem Prozess oder den Daten detektiert oder beobachtet wird. Das Versehen mit einem Zeitstempel ordnet ein genaues Datum und eine genaue Uhrzeit dem Auftreten des Fehlers zu, wodurch die Ereignisse im Zeitverlauf verfolgt und entsprechende Korrektur- oder Vorbeugemaßnahmen getroffen werden können.

Jedes Mal, wenn ein Fehler detektiert wird, wird eine Speicherung mit einem genauen Zeitstempel erzeugt, um zu dokumentieren, wann der Fehler aufgetreten ist. Dadurch kann insbesondere den Wartungsteams, Ingenieuren oder Bedienern geholfen werden, die zeitlichen Tendenzen der Fehler zu analysieren, die Zeitpunkte festzustellen, zu denen die Fehler am häufigsten sind, und die zugrunde liegenden Ursachen nachzuvollziehen.

Dieses Versehen mit dem Zeitstempel 151 kann zur gleichen Zeit wie das Speichern 150 unter Berücksichtigung des Zeitpunkts, zu dem der Fehler in den gespeicherten Informationen detektiert wurde, erfolgen.

So kann das Verfahren ebenfalls eine statistische Analyse 152 des Auftretens der Fehler umfassen.

Eine statistische Analyse kann auch ermöglichen, ein Muster beim Auftreten der Fehler zu bestimmen und so beim Detektieren des Fehlers und beim Bestimmen von dessen Kritikalitätsgrad eine Rolle spielen. Zum Beispiel kann ein kritischer Fehler, der in regelmäßigen Abständen detektiert wird, den Vertrauensindex beim Detektieren verbessern und seinen Kritikalitätsgrad präzisieren.

Zudem kann diese Analyse ermöglichen, zum Beispiel durch Erkennung eines Musters, die zugrunde liegende Ursache des Musters zu bestimmen und eine Korrektur ermöglichen, um das Auftreten der Fehler und verursachte Verluste zu begrenzen.

## Patentansprüche

1. Verfahren zur Detektion von Fehlern eines Gummistreifens für die Herstellung eines Reifens, das durch einen Computer umgesetzt wird und die folgenden Schritte umfasst:
- ein Erhalten (110) wenigstens eines Datenelements, das für eine Oberflächenbeschaffenheit wenigstens eines Teilbereichs des Streifens repräsentativ ist,
- ein Detektieren (120) wenigstens eines Fehlers auf dem Teilbereich des Streifens durch die Analyse des Datenelements, und
für jeden detektierten Fehler,
- ein Bestimmen (130) einer Position des Fehlers auf dem Streifen,
- ein Bestimmen (140) eines Kritikalitätsgrads des Fehlers wenigstens je nach der Position des Fehlers auf dem Streifen.

2. Verfahren nach Anspruch 1, wobei das Datenelement, das für eine Oberflächenbeschaffenheit eines Teilbereichs des Streifens repräsentativ ist, ein Bild der Oberfläche des Streifens oder ein dreidimensionales Profil der Oberfläche des Streifens ist.

3. Verfahren nach Anspruch 1 oder 2, wobei das Verfahren über eine Reihe von Daten, die für die Oberflächenbeschaffenheit eines durchgehend ablaufenden Streifens repräsentativ sind, wiederholt werden, so dass die Daten den gesamten Streifen abdecken.

4. Verfahren nach Anspruch 3, das ferner ein Versehen jedes Auftretens eines Fehlers auf dem Streifen mit einem Zeitstempel, eine statistische Analyse des Auftretens von Fehlern auf dem Streifen umfasst, und wobei das Detektieren (120) eines Fehlers und das Bestimmen (140) von dessen Kritikalitätsgrad ferner anhand der statistischen Analyse durchgeführt werden.

5. Verfahren nach einem der Ansprüche 1 bis 4, wobei das Detektieren (120) von einem Maschinenlernalgorithmus durchgeführt wird, der dafür trainiert ist, die Fehler eines Gummistreifens anhand einer Datenbank von Bildern mit und ohne Fehler zu detektieren, die jeweils mit oder ohne Fehler gekennzeichnet sind, die wenigstens teilweise Bilder von Gummistreifen mit Fehlern beinhaltet.

6. Verfahren nach einem der Ansprüche 1 bis 4, wobei das Detektieren (120) und das Bestimmen (140) des Kritikalitätsgrads von einem Maschinenlernalgorithmus durchgeführt werden, der dafür trainiert ist, die kritischen Fehler eines Gummistreifens anhand einer Datenbank von Bildern mit und ohne kritischen Fehler zu detektieren, die jeweils mit einem Kritikalitätsgrad gekennzeichnet sind.

7. Verfahren nach einem der Ansprüche 1 bis 4, wobei das Detektieren (120) und das Bestimmen (140) des Kritikalitätsgrads von einem Maschinenlernalgorithmus zur Detektion von Anomalien durchgeführt werden, der dafür trainiert ist, die kritischen Fehler eines Gummistreifens anhand einer Datenbank von Bildern mit nicht kritischen Fehlern und ohne Fehler zu detektieren.

8. Verfahren nach einem der vorhergehenden Ansprüche, wobei das Bestimmen (130) der Position des Fehlers das Bestimmen (140) wenigstens einer von einer seitlichen und Längsposition des Fehlers auf dem Streifen umfasst.

9. Verfahren nach einem der vorhergehenden Ansprüche, umfassend das Bestimmen (130) einer Längsposition des Fehlers, und, wenn der für diesen Fehler bestimmte Kritikalitätsgrad eine vorbestimmte Schwelle überschreitet, zusätzliche Schritte des Speicherns der Längsposition des Fehlers und des Abtrennens eines Abschnitts des Streifens, der den Fehler aufweist, vom Rest des Gummistreifens anhand der Längsposition.

10. Verfahren nach einem der vorhergehenden Ansprüche, wobei der Kritikalitätsgrad eines Fehlers wenigstens anhand von dessen seitlicher Position auf dem Streifen und dessen Form festgelegt wird.

11. Verfahren nach einem der vorhergehenden Ansprüche, wobei das Detektieren (120) ein Klassifizieren verschiedener Fehlertypen auf dem Gummistreifen, wie etwa Klumpen, ausgerissene Ränder oder Risse umfasst, wobei der Maschinenlernalgorithmus zur Klassifizierung dafür trainiert ist, die verschiedenen Fehlertypen anhand einer Datenbank von Bildern von Gummistreifen mit verschiedenen Fehlertypen und Kennzeichnungen entsprechend dem Fehlertyp zu klassifizieren.

12. Computerprogramm, das Anweisungen für die Umsetzung des Verfahrens nach einem der Ansprüche 1 bis 9 bei Ausführung dieses Programms durch einen Prozessor beinhaltet.

13. Computerlesbares nichtflüchtiges Speichermedium, auf dem ein Programm für die Umsetzung des Verfahrens nach einem der Ansprüche 1 bis 9 bei Ausführung dieses Programms durch einen Prozessor gespeichert ist.

14. Recheneinheit, die Folgendes umfasst:
- eine Eingabeschnittstelle zum Empfang wenigstens eines Bilds eines Gummistreifens,
- einen Speicher, der wenigstens die Anweisungen eines Computerprogramms nach Anspruch 10 beinhaltet,
- einen Prozessor mit Zugriff auf den Speicher zum Lesen der Anweisungen und Ausführen des Verfahrens nach einem der Ansprüche 1 bis 9,
- eine Ausgabeschnittstelle zum Bereitstellen eines Kritikalitätsgrads eines Fehlers, der auf dem Bild vorhanden ist.

15. Extruder, der geeignet ist, einen Gummistreifen durchgehend zu extrudieren, zum Beispiel auf einem Förderer, und eine Bilderfassungsvorrichtung und/oder ein 3D-Profilometer beinhaltet, die geeignet sind, wenigstens ein Datenelement zu erfassen, das für eine Oberflächenbeschaffenheit wenigstens eines Teilbereichs des extrudierten Gummistreifens repräsentativ ist, und der mit einer Recheneinheit nach dem vorhergehenden Anspruch verbunden ist.
